# DEMANDE DE BREVET EUROPEEN

(11) **EP 2 138 210 A1**
(43) Date de publication de la demande: **30.12.2009**
(21) Numéro de dépôt: 09163684.5
(22) Date de dépôt: 24.06.2009
(51) Int. Cl.: A63F 13/02

(54) **Accessoire immersif de remise en forme pour console de jeux video**

(30) Priorité: 25.06.2008 FR 0803582; 25.06.2008 FR 0803583
(71) Demandeur: Bigben Interactive SA, 59818 Lesquin (FR)
(72) Inventeur: Allaert, Yannick, 59221, Bauvin (FR); Falc, Alain, 8500, Kortrijk (BE)
(74) Mandataire: Vigand, Philippe

(57) **Abrégé**

Un accessoire immersif (10) pour jeux vidéo comprenant une barre (14) servant de poignée dans laquelle est agencé un logement (20) apte à recevoir un contrôleur de jeu (12), caractérisé en ce qu'il est prévu un clapet de protection (24) amovible qui dans une position rabattue recouvre le logement.

## Description

La présente invention concerne de manière générale un périphérique ou accessoire immersif pour console de salon de jeux vidéo. Plus particulièrement l'invention concerne un accessoire immersif en forme d'haltère court dans lequel est intégré un contrôleur de jeu.

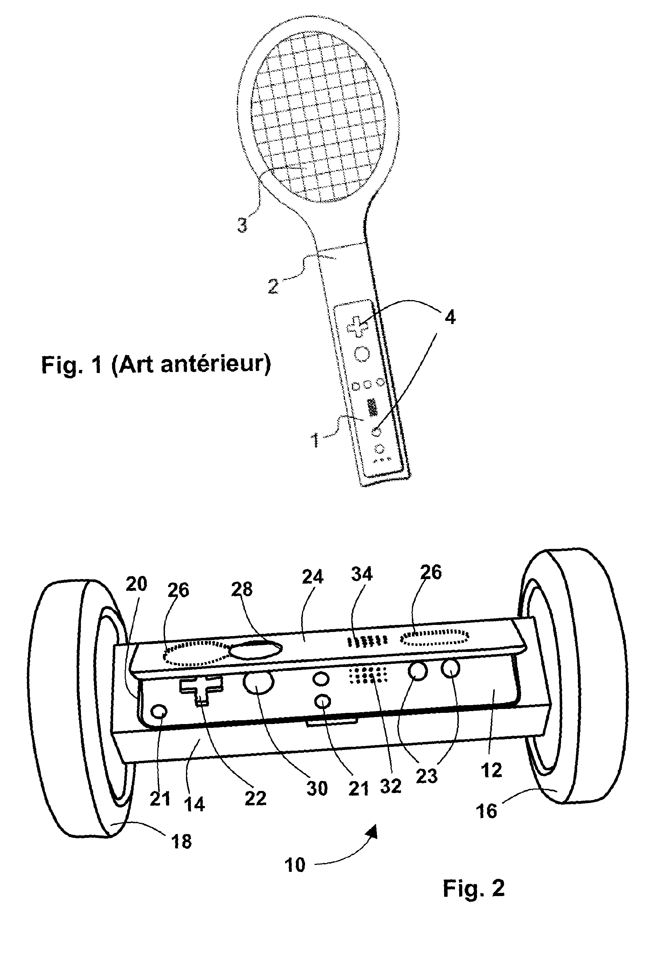

Le domaine des jeux vidéo est en constante évolution et il s'avère nécessaire de rendre les jeux toujours plus immersifs pour séduire les utilisateurs et leur fournir des sensations de jeux simulant toujours plus les conditions réelles qu'ils pourraient rencontrer. Dans ce but, il a été développé un certain nombre d'accessoires immersifs intégrant un contrôleur de jeu. Un tel exemple d'accessoire immersif selon l'art antérieur, est représenté à la figure 1, sur laquelle est visible une raquette de tennis 3 intégrant un contrôleur de jeu 1 au niveau de la poignée 2.

Néanmoins, ce type d'accessoire immersif présente certains inconvénients en particulier avec de nouveaux jeux vidéo d'entraînement physique nécessitant un accessoire immersif avec lequel le joueur va devoir effectuer des mouvements répétitifs sans nécessiter l'actionnement d'aucuns des organes de commande 4 du contrôleur.

En outre, en cas d'utilisation d'un contrôleur de jeu à transmission directionnelle sans fil, le logement doit être agencé à une extrémité de l'accessoire, limitant de ce fait les formes possibles d'accessoires et, par là même, le caractère immersif recherché. En effet, un contrôleur de jeu sans fil communique avec l'ordinateur ou la console exécutant le jeu vidéo via une transmission directionnelle sans fil, par exemple par infrarouges ou par un procédé de triangulation via une barre de capteurs lumineux, alimentée par la console, et placée au-dessus ou en dessous de l'écran de jeu, le contrôleur de jeu repérant cette barre grâce à une caméra sensible à la longueur d'onde prédéfinie des capteurs lumineux. Pour cela, il est nécessaire de pointer le contrôleur de jeu approximativement vers l'écran de façon à avoir la barre dans le champ de vision de la caméra. C'est pourquoi, pour pouvoir assurer une bonne transmission entre le contrôleur et la console, le logement prévu pour le contrôleur de jeu est situé à l'extrémité de l'accessoire de sorte que rien ne vienne faire obstacle à la transmission des données. Ainsi, pour un jeu d'entraînement physique à domicile, il est apparu difficile d'intégrer ce type de contrôleur de jeu à transmission directionnelle dans un accessoire immersif de type haltère court, aux extrémités duquel sont disposés des poids.

On pourra encore noter que l'utilisation d'un logement pour contrôleur de jeu à transmission sans fil, agencé à une extrémité de l'accessoire, limite les formes possibles d'accessoires et, par là même, réduit d'autant le caractère immersif recherché.

Le but principal de la présente invention est de répondre aux différents inconvénients mentionnés ci-dessus. En particulier un premier but consiste à fournir un accessoire immersif pour permettre un entraînement physique à mouvements répétitifs sans risque de presser par inadvertance l'un ou l'autre des organes de commande du contrôleur de jeu inséré dans l'accessoire.

Pour cela, un premier aspect de l'invention concerne un accessoire immersif pour jeux vidéo comprenant une barre servant de poignée dans laquelle est agencé un logement apte à recevoir un contrôleur de jeu, **caractérisé en ce qu**'il est prévu un clapet de protection amovible qui dans une position rabattue, i.e. position fermée, recouvre le logement. L'utilisation d'un tel clapet de protection assure non seulement la protection du contrôleur de jeu inséré dans le logement mais surtout permet d'éviter que le joueur manipule par inadvertance l'un ou l'autre des organes de commande du contrôleur lors d'une séance d'entraînement physique pendant laquelle il exécute des mouvements répétitifs sans nécessiter d'actionner aucun des boutons du contrôleur.

Selon une variante avantageuse, le clapet de protection présente une ouverture laissant un accès à un seul premier organe de commande du contrôleur de jeu. Une telle ouverture limitée pour laisser accessible un unique organe de commande du contrôleur a pour but de permettre au joueur de pouvoir activer au moins une commande de jeu lorsque le clapet est rabattu, i.e. dans sa position fermée.

Selon une autre variante avantageuse, le clapet de protection comprend au moins un évidement intérieur, agencée en regard d'au moins un deuxième organe de commande du contrôleur de jeu lorsqu'il est inséré dans le logement prévue à cet effet. La présence d'un tel évidement intérieur permet d'éviter l'activation de l'organe de commande placé dessous, même en cas de pression soutenue sur la zone du clapet correspondant à la position de l'organe de commande, tout en ne gênant pas la préhension de la poignée formée par la barre puisque l'évidement se trouve à l'intérieur. De préférence, l'évidement est réalisé sous la forme d'un disque creusé dans l'épaisseur du clapet de protection. L'utilisation de l'épaisseur du clapet pour réaliser l'évidement permet de réduire le jeu entre le clapet dans sa position fermée et le contrôleur de jeu et permet donc d'optimiser la taille du logement par rapport à celle du contrôleur.

Selon une autre variante avantageuse, le clapet de protection comprend des ouvertures tubulaires disposées en regard des ouvertures d'un haut-parleur du contrôleur de jeu. De telles ouvertures très fines permettent de restituer le son émis par le contrôleur tout en préservant l'avantage de protection recherché.

Selon un mode de réalisation avantageux, pour lequel le contrôleur de jeu associé est à transmission directionnelle sans fil, l'accessoire présente une forme générale d'haltère comprenant une barre et deux poids situés à deux extrémités de la barre, et au moins un des poids comprend une ouverture évasée vers l'extérieur et agencée en regard de moyens de transmission directionnel du contrôleur de jeu. Un tel accessoire présente le caractère immersif recherché dans la mesure où sa forme générale est semblable à celle d'un haltère court, tout en permettant d'assurer une bonne transmission entre le contrôleur de jeu et l'ordinateur ou la console exécutant le jeu vidéo, par l'intermédiaire de l'ouverture évasée, pratiquée dans le poids masquant initialement les moyens de transmission du contrôleur.

De préférence, l'ouverture creusée dans le poids est choisie tronconique de sorte à obtenir un angle au sommet relativement constant quelque soit le plan considéré. A cet effet, l'ouverture pratiquée présente de préférence un angle au sommet d'au moins 50° quelque soit l'orientation considérée. Avantageusement, l'angle au sommet est compris entre 60° et 75° suivant les orientations considérées. La sélection d'un tel angle moyen au sommet fournit un bon compromis entre efficacité de la transmission et esthétique générale de l'haltère. Avantageusement, l'autre poids comprend une ouverture évasée vers l'extérieur identique à celle pratiquée dans le premier poids. Ainsi, non seulement l'équilibre des poids est assuré de manière à éviter tout inconfort à l'usage et à faciliter le réglage du poids total de l'haltère, mais aussi l'esthétique général de l'haltère sans trouve renforcer par la symétrie du design.

Selon une autre variante avantageuse, il est prévu un mécanisme de démontage des poids. Un tel mécanisme permet de changer les poids situés aux extrémités de la barre et ainsi de permettre une progression du poids total de l'haltère en fonction de l'évolution de son entraînement physique.

Un deuxième aspect de l'invention concerne un contrôleur de jeu immersif comprenant un accessoire immersif selon le premier aspect et équipé d'un contrôleur de jeu inséré dans le logement prévu à cet effet.

Un troisième aspect de l'invention concerne un jeu vidéo d'entraînement physique **caractérisé en ce qu**'il est programmé pour coopérer avec un contrôleur de jeu immersif selon le deuxième aspect au moyen d'un programme d'entraînement physique prédéfini.

Selon un mode de réalisation avantageux, il est prévu d'activer au moins une commande du programme d'entraînement physique prédéfini au moyen de l'organe de commande accessible à travers l'ouverture pratiquée clapet de protection de l'accessoire immersif.

Un quatrième aspect de l'invention concerne l'utilisation d'un contrôleur de jeu immersif selon le deuxième aspect avec un jeu vidéo selon le troisième aspect pour réaliser un programme d'entraînement physique prédéfini.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1, déjà décrite, représente un accessoire en forme de raquette de tennis selon l'art antérieur;
- la figure 2 représente une vue de dessus et en perspective d'un accessoire de jeu en forme d'haltère court dans lequel est inséré un contrôleur de jeu, selon un mode de réalisation de la présente invention ;
- la figure 3 représente une vue en coupe de l'haltère dans lequel est inséré le contrôleur de jeu ;
- la figure 4 représente une vue de devant et en perspective de l'haltère ;
- la figure 5 représente une vue de dessous et en perspective de l'haltère.

L'invention sera décrite ci-après uniquement à titre d'exemple non limitatif en relation avec les figures 2 à 5, la figure 1 ayant été déjà décrite en liaison avec l'art antérieur. Bien que la suite de la présente description sera présentée en liaison avec un accessoire immersif en forme d'haltère court, il est tout à fait envisageable de l'appliquer à d'autres formes d'accessoires immersifs pour permettre un entraînement physique au moyen de mouvements répétitifs, comme par exemple les accessoires de musculation de la main, une corde à sauter, des accessoires de tirage (barre de triceps, triangle de tirage, etc.), ou encore un haltère long, etc.

La figure 2 représente une vue de dessus et en perspective d'un accessoire immersif en forme d'haltère court 10 dans lequel est inséré un contrôleur de jeu 12. Un haltère court, connu également sous la dénomination anglaise « dumbbell » comprend généralement une barre ou poignée centrale 14 aux extrémités de laquelle sont prévus des poids 16, 18. Ces poids sont choisis de préférence en forme de disque pour permettre de faire rouler l'haltère. La poignée centrale comprend un logement 20 apte à recevoir le contrôleur de jeu 12.

Ce contrôleur de jeu permet de commander certaines fonctionnalités d'un jeu d'entraînement physique exécuté sur un ordinateur ou une console de jeux vidéo. Le jeu d'entraînement physique consiste notamment à effectuer des tractions de l'haltère, ce dernier étant tenu par le joueur dans une main au niveau de la poignée.

Pour éviter toute manipulation non souhaitée des organes de commande 21, 22, 23 du contrôleur lors de séances de traction ainsi que pour protéger le contrôleur d'une pression directe trop forte, il est avantageusement prévu un clapet de protection amovible 24 venant, dans sa position rabattue, fermer le logement 20 et recouvrir le contrôleur 12 qu'il contient.

Ce clapet de protection 24 est avantageusement pourvu d'évidements intérieurs 26 dans son épaisseur en regard des organes de commande les plus proéminents, comme par exemple, la croix directionnelle 22 ou les boutons 23, appelés encore boutons « 1 » et « 2 ». En outre, il est avantageusement prévu un orifice 28 au travers du clapet de protection 24, de manière à laisser l'accès à un organe de commande 30, appelé encore bouton « A », du contrôleur de jeu 12. Ainsi, même lorsque le clapet de protection est rabattu, le joueur peut actionner l'organe de commande 30 pour activer une commande du programme d'entraînement physique auquel il est train de participer. Enfin, lorsque le contrôleur de jeu est muni d'un haut-parleur dans les canaux de sortie sont réalisés sous la forme d'ouvertures fines 32, il est prévu de préférence de munir le clapet de protection 24 d'ouvertures tubulaires traversantes 34 disposées en regard des ouvertures fines 32.

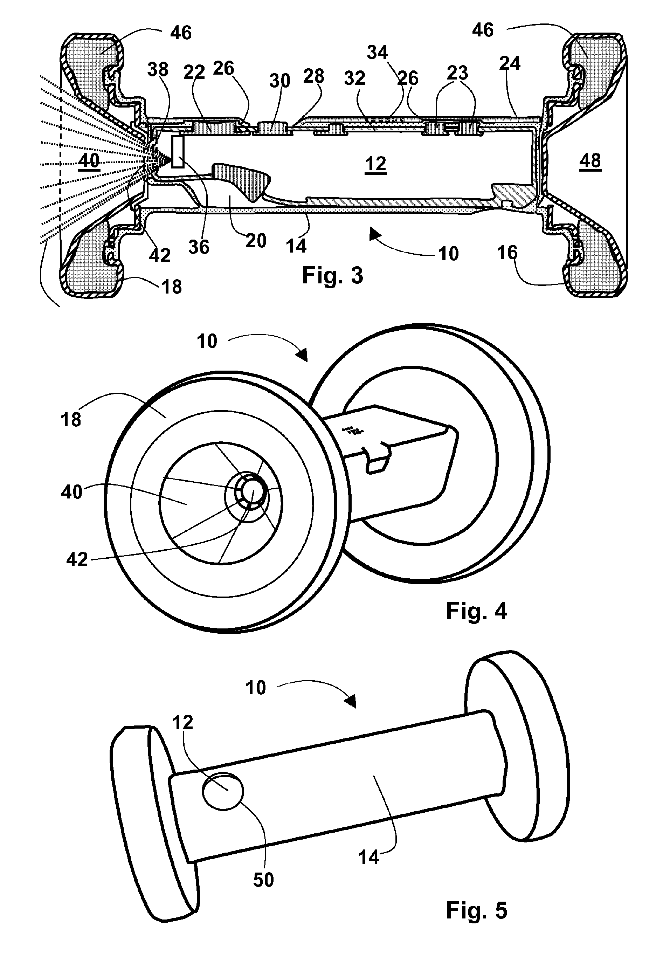

La figure 3 représente une vue en coupe de l'haltère 10 dans lequel est inséré le contrôleur de jeu 12. Comme mentionné en introduction, un des problèmes existants lié à l'utilisation d'un contrôleur de jeu 12 à transmission directionnelle sans fil, réside dans la bonne transmission de données entre d'une part le contrôleur et d'autre part l'ordinateur ou la console de jeu distants. En effet, la présence des deux poids 16 et 18 aux deux extrémités de la poignée centrale 14, masque la fenêtre transparente 38 placée devant l'émetteur/récepteur 36 que contient le contrôleur.

Pour remédier à cela, il avantageusement prévu que le poids situé à l'extrémité correspondante à la fenêtre 38 du contrôleur soit pourvu d'une ouverture évasée 40 vers l'extérieur de sorte à être agencée en regard des moyens de transmission directionnelle du contrôleur de jeu. Le fond de l'ouverture évasée 40 peut être munie d'un couvercle transparent 42, disposé en regard de la fenêtre 38, empêchant l'introduction de poussière au niveau de liaison entre le poids 18 et la poignée centrale 14. De la même manière, l'ouverture évasée 40 peut être fermée au moyen d'une paroi externe transparente, non prévue dans l'exemple représenté à la figure 3. Ainsi la transmission des données reste possible et efficace suivant un large angle, représenté par les rayons en pointillés 44.

On notera encore que l'ouverture évasée 40 est avantageusement tronconique pour assurer une transmission optimale au travers du poids 18. A cet effet, il est avantageusement prévu que l'ouverture pratiquée présente un angle au sommet d'au moins 50° quelque soit l'orientation considérée. De préférence, l'angle au sommet sera compris entre 60° et 75° suivant les orientations considérées. En effet, la forme tronconique associée à cette ouverture d'angle au sommet permet une bonne transmission tout au long d'un mouvement de traction effectué par le joueur, et cela aussi bien lorsque le contrôleur de jeu et l'haltère sont en position horizontale comme représentée sur la figure 3, que lorsque l'haltère et le contrôleur pivotent horizontalement pour atteindre une position décalée de 90° par rapport à celle représentée sur la figure 3.

On notera aussi, qu'il est avantageusement prévu de régler le poids total de l'haltère 10, c'est-à-dire avec les deux poids 16, 18, la poignée centrale 14 et le contrôleur de jeu 12, par l'intermédiaire de lests 46 disposés dans les poids. Pour plus de simplicité dans la fabrication des haltères et pour homogénéiser les lests 46 utilisés, il est avantageusement prévu que le poids 16 présente également une ouverture évasée 48 identique à celle pratiquée dans le poids 18. Pour assurer un suivi du joueur, notamment dans l'évolution de son entraînement physique, il peut être prévu un mécanisme de démontage des poids permettant de les remplacer par d'autres poids plus lourds ou plus légers. Un tel mécanisme permet en particulier d'obtenir une progression du poids total de l'haltère en fonction de l'évolution de l'entraînement physique du joueur.

Se référant toujours à la figure 3, on distingue sur cette vue en coupe, le clapet de protection 24, dans sa position rabattue, recouvrant le contrôleur de jeu 12 inséré dans le logement 20 prévu à cet effet. Le clapet de protection 24 comprend avantageusement des évidements intérieurs 26, agencées autour des organes de commande 22, 23 les plus proéminents du contrôleur, à l'exception de l'organe de commande 30. Ces évidements intérieurs sont réalisés sous la forme de disques creusés dans l'épaisseur du clapet de protection 24. Comme mentionné, il est prévu de préférence de rendre accessible un seul organe de commande 30 au moyen d'un orifice 28 pratiquée dans le clapet.

La figure 4 représente une vue de devant et en perspective de l'haltère 10. Cette vue permet de mieux distinguer le poids 18 ainsi que l'ouverture tronconique au fond de laquelle est de préférence placée une plaque transparente 42.

La figure 5 représente une vue de dessous et en perspective de l'haltère 10. Sur cette vue est représentée la barre centrale 14, ou poignée, sur laquelle peut être prévue un orifice 50 agencé sur la face opposée à celle figurée par le clapet dans sa position fermée. Cet orifice 50 permet d'accéder au contrôleur de jeu 12 depuis l'arrière, notamment pour le sortir plus aisément de son logement.

La présente description s'est rapportée essentiellement à l'accessoire immersif, cependant, la présente invention concerne selon un autre aspect également le contrôleur de jeu immersif consistant dans l'association de cet accessoire immersif avec un contrôleur de jeu inséré dans le logement prévu à cet effet.

La présente invention concerne encore selon un autre aspect un jeu vidéo d'entraînement physique **caractérisé en ce qu**'il est programmé pour coopérer avec un contrôleur de jeu immersif tel que mentionné ci-dessus.
Enfin selon encore un autre aspect, la présente invention concerne l'utilisation d'un contrôleur de jeu immersif avec un jeu vidéo tels que décrits l'un et l'autre ci-dessus pour réaliser un programme d'entraînement physique prédéfini.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées.

En particulier, on notera qu'il a été fait référence à un accessoire immersif en forme d'haltère court, néanmoins, il est clair que la présente invention s'applique à tout type d'haltères dont la forme des poids peut varier sensiblement. Ces derniers peuvent notamment être directement intégrés dans la barre, ses deux extrémités étant alors lestées, tout en préservant une ouverture évasée.

## Revendications

1. Accessoire immersif (10) pour jeux vidéo comprenant une barre (14) servant de poignée dans laquelle est agencé un logement (20) apte à recevoir un contrôleur de jeu (12), **caractérisé en ce qu'**il est prévu un clapet de protection (24) amovible qui dans une position rabattue recouvre le logement.

2. Accessoire immersif (10) selon la revendication 1, **caractérisé en ce que** le clapet de protection (24) présente une ouverture (28) laissant un accès à un seul premier organe de commande (30) du contrôleur de jeu (12).

3. Accessoire immersif (10) selon la revendication 1 ou 2, **caractérisé en ce que** le clapet de protection (24) comprend au moins évidement intérieur (26), agencée en regard d'au moins un deuxième organe de commande (22, 23) du contrôleur de jeu (12) lorsqu'il est inséré dans le logement (20) prévue à cet effet.

4. Accessoire immersif (10) selon la revendication 3, **caractérisé en ce que** l'évidement (26) est réalisé sous la forme d'un disque creusé dans l'épaisseur du clapet de protection (24).

5. Accessoire immersif (10) selon l'une des revendications 2 à 4, **caractérisé en ce que** le clapet de protection (24) comprend des ouvertures tubulaires (34) disposées en regard des ouvertures (32) d'un haut-parleur du contrôleur de jeu (12).

6. Accessoire immersif (10) selon l'une des revendications 1 à 5, pour lequel le contrôleur de jeu (12) associé est à transmission sans fil directionnelle, **caractérisé en ce que** l'accessoire présente une forme générale d'haltère (10) comprenant la barre (14) et deux poids (16, 18) situés à deux extrémités de la barre, et **en ce qu'**au moins un des poids (18) comprend une ouverture évasée (40) vers l'extérieur et agencée en regard de moyens de transmission directionnel (36) du contrôleur de jeu (12).

7. Contrôleur de jeu immersif comprenant un accessoire immersif (10) selon l'une des revendications précédentes, équipé d'un contrôleur de jeu (12) inséré dans le logement (20) prévu à cet effet.

8. Jeu vidéo d'entraînement physique **caractérisé en ce qu'**il est programmé pour coopérer avec un contrôleur de jeu immersif selon la revendication 7 au moyen d'un programme d'entraînement physique prédéfini.

9. Jeu vidéo selon la revendication 8, **caractérisé en ce qu'**il est prévu d'activer au moins une commande du programme d'entraînement physique prédéfini au moyen de l'organe de commande (30) accessible à travers l'ouverture pratiquée clapet de protection (24) de l'accessoire immersif selon la revendication 2.

10. Utilisation d'un contrôleur de jeu immersif selon la revendication 7 avec un jeu vidéo selon la revendication 8 ou 9 pour réaliser un programme d'entraînement physique prédéfini.

11. Accessoire immersif selon l'une des revendications 1 à 6, **caractérisé en ce qu'**il est prévu un mécanisme de démontage des poids.
